# EUROPÄISCHE PATENTSCHRIFT

(11) **EP 2 029 312 B1**
(45) Veröffentlichungstag und Bekanntmachung des Hinweises auf die Patenterteilung: **23.01.2013**
(21) Anmeldenummer: 06753859.5
(22) Anmeldetag: 24.05.2006
(51) Int. Cl.: B23K 26/42, B23K 37/04, B23Q 1/03, B23Q 3/10, B23K 26/38, B23K 101/18

(54) **BEARBEITUNGSANLAGE MIT EINER WERKSTÜCKAUFLAGE ZUR AUFNAHME EINES INSBESONDERE TAFELFÖRMIGEN WERKSTÜCKS MIT AUF AUFLAGEELEMENTEN ANBRINGBAREN TRAGELEMENTEN**
MACHINING UNIT WITH A WORKREST FOR ACCOMMODATING AN, IN PARTICULAR IN PILE, WORKPIECE WITH SUPPORTING ELEMENTS WHICH CAN BE ATTACHED TO REST ELEMENTS
INSTALLATION D'USINAGE AVEC UN PORTE-PIÈCE POUR RECEVOIR UNE PIÈCE À USINER NOTAMMENT OUS FORME D'EMPILEMENTS, AVEC DES ÉLEMENTS DE SUPPORT POUVANT ÊTRE MONTÉS SUR DES ÉLEMENTS D'APPUI

(43) Veröffentlichungstag der Anmeldung: 04.03.2009
(73) Patentinhaber: TRUMPF Werkzeugmaschinen GmbH + Co. KG, 71254 Ditzingen (DE)
(72) Erfinder: KILIAN, Friedrich, 71229 Leonberg (DE)
(74) Vertreter: Maser, Jochen
(86) Internationale Anmeldenummer: PCT/EP2006/004985
(87) Internationale Veröffentlichungsnummer: WO 2007/134627

(56) Entgegenhaltungen:
- JP-A- 8 132 228
- JP-A- 2004 330 268
- US-A- 3 944 203
- US-A- 4 097 713

## Beschreibung

Die Erfindung betrifft eine Bearbeitungsanlage gemäb dem Obabegriff des Anspruchs 1 (siche, 2.B., JP 08/132 228), welche das Werkstück mit einem Schneidstrahl, insbesondere Laserstrahl, bearbeitet.

Zur Bearbeitung von insbesondere tafelförmigen Werkstücken in Laserbearbeitungsanlagen ist eine Werkstückauflage vorgesehen, die einen Rahmen mit mehreren, vorzugsweise parallel zueinander angeordneten Auflageelementen aufweist, auf denen das zu bearbeitende Werkstück aufliegt. Die Auflageelemente weisen zumeist in regelmäßigen Abständen Tragpunktspitzen auf und bilden ein Auflagefeld für das oder die Werkstücke.

Solche Laserbearbeitungsanlagen umfassen einen relativ zur Werkstückauflage bewegbaren Laserschneidkopf, um mit einem Laserstrahl ein weitgehend ruhendes Werkstück, das auf den Tragpunktspitzen der Auflageelemente aufliegt, zu bearbeiten. Während der Bearbeitung kommt es beim Überfahren der Tragpunktspitzen durch den Laserstrahl zu Problemen, wie beispielsweise Beschädigungen der Tragpunktspitzen durch Aufschweißungen, Beschädigung der Tragpunktspitzen durch Wegschmelzen und/oder ein ungleichmäßiger Schnitt zwischen dem Gutteil und Restteil, da die Schneidverhältnisse an den Tragpunktspitzen anders als an den benachbarten Tragpunktspitzen sind.

Um optimale Schneidverhältnisse aufrecht zu erhalten wird gemäß der JP 2004330268A eine Werkstückauflage vorgeschlagen, bei der austauschbare Tragpunktspitzen auf dem Auflageelement vorgesehen sind. In regelmäßigen Abständen sind die Auflageelemente mit Aufnahmebereichen versehen, um die Tragpunktspitzen aufzunehmen. Diese Ausgestaltung weist den Nachteil auf, dass eine sehr zeitintensive und manuelle Auswechslung der einzelnen Tragpunktspitzen erforderlich ist.

Aus der US 4,097,713 ist eine Werkstückaufnahme für eine Plasmabogen-Wasserschneidmaschine bekannt, bei welcher mehrere Tragpunktspitzen fest an einem Auflageelement angeordnet sind. Hierbei ist vorgesehen, dass die gesamten Auflageelemente in Analogie zur JP 08 132228 A bei Beschädigungen der Tragpunktspitzen ausgetauscht werden. Dadurch ist ein bedarfsmäßiger Austausch bei Beschädigung von einzelnen Tragpunktspitzen nicht ermöglicht. Dies verursacht eine kostenintensive Auswechslung der gesamten Werkstückauflage mit den daran angeordneten Tragpunktspitzen, selbst wenn nur eine Tragpunktspitze oder einzelne Tragpunktspitzen beschädigt sein sollten. Analoges gilt für JP 08/132228 A. Darüber hinaus sind solche Auswechslungen vom Personal durchzuführen, so dass ein autarker Betrieb einer solchen Maschine nicht möglich ist.

Der Erfindung liegt deshalb die Aufgabe zugrunde, eine Bearbeitungsanlage mit einer Werkstückauflage zur Aufnahme eines insbesondere tafelförmigen Werkstücks vorzuschlagen, bei der eine einfache Bestückung der Auflageelemente vorgesehen ist und die getrennten Gut- und Restteile sicher aufgenommen werden.

Diese Aufgabe wird erfindungsgemäß durch die Merkmale des Anspruchs 1 gelöst. Weitere vorteilhafte Ausgestaltungen und Weiterbildungen der Erfindung sind in weiteren Ansprüchen angegeben.

Die Werkstückauflage der Bearbeitungsanlage wird vor dem Beladen mit einem oder mehreren Werkstücken auf die anstehende Bearbeitung vorbereitet, indem in Abhängigkeit der Schachtelung der Gutteile in einem Werkstück ein oder mehrere Tragelemente mit einer Handhabungseinrichtung an dem zumindest einen Auflageelement angebracht oder aufgebracht werden. Diese Tragelemente weisen zumindest eine Auflagefläche auf, auf welcher das Gutteil und/oder das Restteil aufliegt. Die Tragelemente werden dabei derart auf dem oder den Auflageelementen angebracht, dass die Schneidkonturen benachbart zur Auflagefläche des Tragelementes für das Gutteil verlaufen. Gleichzeitig werden die Tragelemente derart zueinander auf dem Auflageelement der Werkstückauflage positioniert, dass eine sichere Aufnahme des beziehungsweise der Gutteile nach dem Schneidprozess ermöglicht ist. Durch diese Anbringung der Tragelemente in Abhängigkeit der Schachtelung des zu bearbeitenden, insbesondere tafelförmigen Werkstücks wird eine langlebige Werkstückauflage geschaffen, da ein unmittelbares Überfahren der Auflageelemente durch den Schneidstrahl verhindert ist beziehungsweise die Auflageelemente durch das zumindest eine Tragelement geschützt sind. Darüber hinaus ist ermöglicht, dass Beschädigungen des zu bearbeitenden Werkstückes durch Aufschmelzen oder Reflexionen während des Schneidprozesses verhindert werden.

Das Auflageelement ist gemäß einer bevorzugten Ausführungsform der Werkstückauflage der Bearbeitungsanlage mit einer wellenförmigen oder sägezahnförmigen Struktur versehen, an der das Tragelement gegen Verschieben gesichert an dem Auflageelement anbringbar ist. Somit kann nach dem Einstellen der Position sichergestellt werden, dass durch das Be- und Entladen der Werkstückauflage ein unbeabsichtigtes Verschieben oder Verfahren des zumindest einen Tragelementes verhindert ist. Diese sägezahnförmige, zahnförmige oder wellenförmige Struktur kann darüber hinaus eine hinreichend feine Einstellung der Position ermöglichen.

Alternativ kann vorgesehen sein, dass das Auflageelement einen geradlinigen, vorzugsweise horizontal ausgebildeten, Abschnitt oder mehrere geradlinige Abschnitte, die beispielsweise durch eine kleine Vertiefung zueinander getrennt sind, aufweist. Insbesondere durch einen durchgehenden horizontal ausgerichteten Abschnitt ist eine einfache Geometrie der Auflageelemente ermöglicht, welche eine stufen- oder rasterlose Positionierung der Tragelemente ermöglicht. Gleichzeitig ist diese obere Kante gegenüber der Auflagefläche vertieft und ermöglicht somit eine verschleißarme Anordnung.

Nach einer ersten bevorzugten Ausführungsform der Erfindung ist vorgesehen, dass das eine Tragelement zumindest eine Auflagespitze oder Auflagefläche für ein Gutteil umfasst und als Gutteil-Trageelement ausgebildet ist und ein weiteres Tragelement zumindest eine Auflagespitze oder Auflagefläche für ein Restteil aufweist und als Restteil-Tragelement ausgebildet ist, wobei die Auflagefläche oder -spitze des Gutteils auf einem höheren Niveau als die des Restteils angeordnet ist. Dadurch wird ermöglicht, dass nach dem vollständigen Bearbeitungsprozess die Gutteile erhöht gegenüber dem oder den Restteilen aufgenommen werden. Dies ermöglicht eine vereinfachte Entnahme der Gutteile und anschließend der Restteile. Ebenso ist eine schnelle optische Kontrolle des Bearbeitungsstatus gegeben.

Nach einer alternativen Weiterbildung der Erfindung ist vorgesehen, dass das Tragelement eine Auflagespitze oder Auflagefläche für ein Gutteil und zumindest benachbart hierzu eine Auflagespitze oder eine Auflagefläche für ein Restteil aufweist, wobei die Auflagefläche des Gutteiles auf einem höheren Niveau als die des Restteiles vorgesehen ist. Diese Anordnung ermöglicht, dass sowohl der geschnittene Randbereich des Restteils als auch der des Gutteils eine definierte Auflage und Position einnimmt.

Bevorzugt ist vorgesehen, dass eine Höhendifferenz zwischen der Auflagefläche des Gutteils und der des Restteils größer als eine Dicke des plattenförmigen Materials ausgebildet ist. Dadurch kann nach dem Schneidprozess eine exakte Trennung zwischen dem Gut- und Restteil erfolgen und ein Verklemmen der Teile zueinander verhindert werden.

Eine weitere vorteilhafte Ausgestaltung der Erfindung sieht vor, dass die Auflagefläche des Gutteils oder die des Restteils elektrisch isolierend ausgebildet ist. Dadurch kann mittels Messung eines elektrischen Potentialunterschiedes festgestellt werden, ob ein vollständiges Freischneiden der Gutteile von dem oder den Restteilen erfolgt ist.

Die Tragelemente sind gemäß einer vorteilhaften Ausgestaltung der Erfindung einstückig als Schneid-Biegeteil oder Stanz-Biegeteil ausgebildet. Dadurch ist eine vereinfachte Herstellung ermöglicht, so dass mittels der Bearbeitungsanlage selbst zumindest teilweise neue Tragelemente hergestellt werden können.

Die Tragelemente umfassen gemäß einer ersten Ausführungsform der Erfindung einen nach unten offenen U-förmige Querschnitt, wobei zumindest eine am Auflageelement vorgesehene Tragpunktspitze von dem Tragelement überdeckt wird. Bevorzugt liegt das Tragelement gleichzeitig auf der zumindest einen Tragpunktspitze auf. Dadurch kann das Tragelement ein Schutz der darunter liegenden Tragpunktspitze ermöglichen. Darüber hinaus weist der U-förmige Querschnitt den Vorteil auf, dass ein einfaches Aufstecken und Abziehen als auch ein Verschieben entlang dem Auflageelement ermöglicht ist.

Bevorzugt sind die Schenkel des Tragelementes derart zueinander positioniert, dass diese unter zumindest einer geringen Vorspannung an den Seitenflächen des Auflageelementes anliegen. Es wird zumindest eine geringe Klemmung erzielt, um eine sichere Positionierung zu ermöglichen, wobei eine schwingungsarme oder schwingungsfreie Anordnung der Tragelemente an den Auflageelementen gegeben ist.

Nach einer weiteren vorteilhaften Ausgestaltung der ersten Ausführungsform der Tragelemente ist vorgesehen, dass benachbart zur Gutteilauflagefläche oder zwischen einer Gutteilauflagefläche und einer Restteilauflagefläche ein Schutzabschnitt vorgesehen ist, der zumindest eine Tragpunktspitze überdeckt. Dieser Schutzabschnitt liegt unterhalb des Schneidspaltes in der Schneidkontur. Dadurch wird das Auflageelement sowie die darunter liegende zumindest eine Tragpunktspitze geschützt. Des Weiteren ist bevorzugt vorgesehen, dass dieser Schutzabschnitt zumindest geringfügig gegenüber einer Auflagefläche des Werkstückes geneigt ist. Dadurch können Rückspritzer oder Reflexionen während der Schneidbearbeitung verringert werden, so dass auch die Unterseite des Gutteils eine qualitative hohe Oberfläche aufweist.

Nach einer alternativen Ausführungsform des Tragelementes ist vorgesehen, dass dieses Tragelement mit einem ersten und einem zweiten Befestigungsabschnitt an einem Auflageelement angreift, welches eine gegenüber der Auflageebene des Werkstücks geneigte Schutzleiste umfasst, die eine Halteleiste zumindest teilweise beim Überfahren des Schneidstrahles überdeckt. Dadurch wird ermöglicht, dass diese Halteleiste frei von Schlacke sowie weiteren Einflüssen durch Aufschmelzen oder Materialspritzer oder dergleichen ist, so dass eine verschmutzungsunempfindliche Anlage oder Angriffsfläche für das Tragelement zur sicheren Positionierung gegeben ist.

Die Halteleiste ist bevorzugt V-förmig zur Schutzleiste angeordnet, wobei die Schutzleiste zwischen dem Werkstück und der Halteleiste vorgesehen ist. Die Halteleiste geht anschließend in eine senkrecht stehende Auflageleiste über, welche bevorzugt am Rahmen einer Werkstückauflage befestigt ist und insbesondere von rechtwinklig dazu angeordneten Trägerstreben unterstützt wird.

Das Tragelement ist gemäß dieser bevorzugten Ausführungsform mit einem ersten Befestigungsabschnitt, der insbesondere Beinchen umfasst, welche sich zumindest an der Halteleiste abstützen und insbesondere diese teilweise hintergreifen und mit einem weiteren Befestigungsabschnitt, der insbesondere Ärmchen umfasst, welche auf einer dem Werkstück abgewandten Seite der Schutzleiste angreifen. Dadurch wird ermöglicht, dass die Ärmchen und Beinchen des Tragelementes jeweils an schmutzunempfindlichen Auflageflächen angreifen. Dadurch kann sichergestellt werden, dass die Auflagefläche der an dem Auflageelement positionierten Tragelemente in einer einheitlichen Auflageebene liegen, so dass gleichbleibende Arbeitsbedingungen und eine exakte Ausrichtung des Werkstücks auf der Werkstückauflage ermöglicht ist.

Die Auflageelemente zur Aufnahme der Tragelemente weisen bevorzugt zwischen der Schutzleiste und der Halteleiste Aussparungen auf, in die die Beinchen zumindest teilweise eingreifen. Durch diese Anordnung der überdeckenden Schutzleiste greifen die Beinchen geschützt an der Halteleiste an, so dass während des Schneidprozesses durch den von oben einwirkenden Schneidstrahl sowie die Schlacke, Funken und sonstige Spritzer ein Aufschmelzen oder Aneinanderbacken der Beinchen am Auflageelement verhindert wird. Analoges gilt für die Ärmchen, welche auf der Unterseite der Schutzleiste abstützend anliegen.

Zur Fixierung und schwingungsfreien Aufnahme der alternativen Ausführungsform der Tragelemente ist vorgesehen, dass an einer Unterseite der Schutzleiste ein Federelement vorgesehen ist, welches das Tragelement in einer Halteposition nach dem Positionieren zum Auflageelement, insbesondere zur Halteleiste, sichert. Dadurch kann auch eine erhöhte Prozesssicherheit beim Be- und Entladen des Werkstückes beziehungsweise der Gut- und Restteile gegeben sein.

Zur Erhöhung der Bearbeitungsqualität einer zum Auflageelement gerichteten Fläche des Werkstückes ist vorgesehen, dass an dem Tragelement alle in Richtung zum Werkstück weisenden freien Stirnflächen gegenüber einer Auflageebene des Werkstücks geneigt sind. Dadurch kann die Beeinträchtigung durch Reflexionen erheblich minimiert werden.

Die alternative Ausführungsform des Tragelements weist bevorzugt in der Draufsicht gesehen eine V-förmige oder daran angenäherte Gestalt auf. Dadurch kann durch die Ausbildung der Ärmchen und Beinchen eine einfach Montage und Demontage gegeben sein. Des Weiteren kann ein relativ dünnes Blechbiegeteil eingesetzt werden, welches hohe Lasten aufnehmen kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Darstellung einer Bearbeitungsanlage,
- Figur 2: eine schematische Seitenansicht eines Auflageelementes mit darauf angeordneten Tragelementen,
- Figur 3: eine Rückansicht der Tragelemente gemäß Figur 2,
- Figur 4a bis c: schematische Seitenansicht des Tragelementes gemäß Figur 3,
- Figur 5: eine perspektivische Darstellung eines Ausschnittes von einem auf der Werkstückauflage aufliegenden und bearbeiteten Werkstückes,
- Figur 6: eine perspektivische Darstellung auf eine alternative Ausführungsform des Tragelementes und
- Figur 7: eine schematische Seitenansicht des Tragelementes gemäß Figur 6.

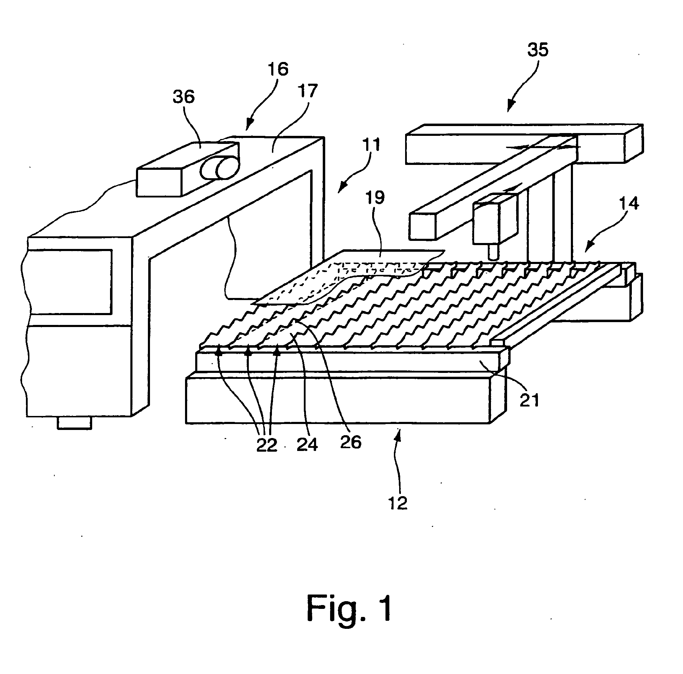

Die Figur 1 zeigt eine perspektivische Teilansicht einer Bearbeitungsanlage 11, insbesondere einer Laserbearbeitungsanlage. Eine in einem Be - und Entladebereich 12 angeordnete Werkstückauflage 14 ist zum Einfahren in eine Bearbeitungsmaschine, insbesondere Laserbearbeitungsmaschine 16 bereitgestellt, von der teilweise ein Gehäuse 17 dargestellt ist. In dieser Lasermaschine wird über ein nicht näher dargestelltes Linearsystem ein Schneidkopf oberhalb eines auf der Werkstückauflage 14 aufliegenden Werkstücks 19 zum Einbringen einer Schneidkontur verfahren.

Die Werkstückauflage 14 besteht aus einem Rahmen 21, welcher mehrere nebeneinander angeordnete Auflageelemente 22 aufnimmt. In einem ersten Ausführungsbeispiel umfassen die Auflageelemente 22 eine Auflageleiste 24 und oberhalb daran angeordnet Tragpunktspitzen 26, welche eine spitz zulaufende Auflagespitze umfassen.

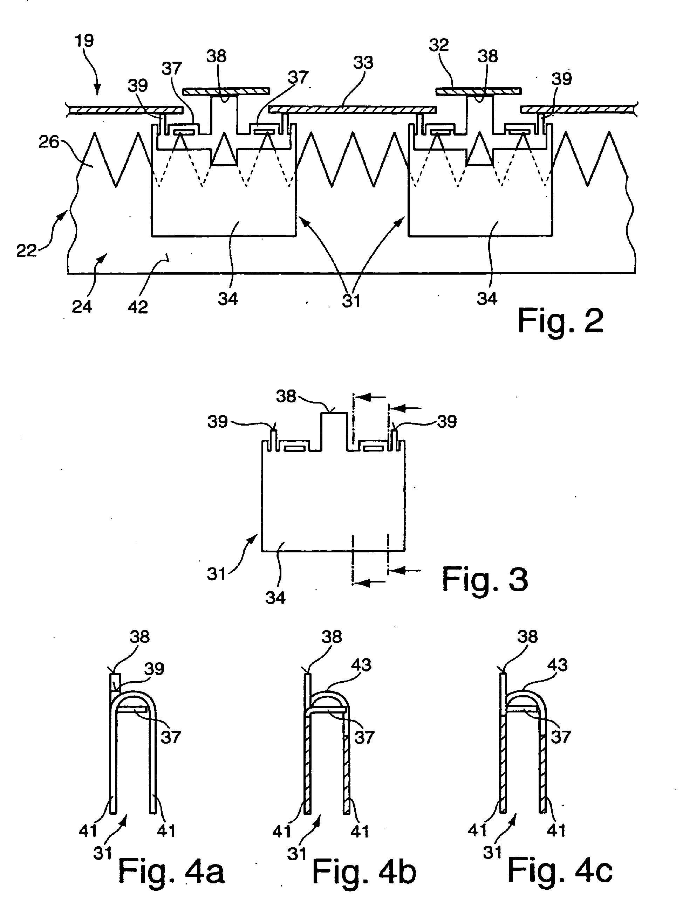

In Figur 2 ist eine schematische Seitenansicht einer ersten Ausführungsform eines Auflageelementes 22 mit darauf angeordneten Tragelementen 31 dargestellt, welche das Werkstück 19 aufnehmen. Nach der Bearbeitung ist aufgrund des Schneidsprozesses das Werkstück 19 in ein Gutteil 32 und ein Restteil 33 getrennt.

Das Tragelement 31 umfasst einen im Querschnitt nach unten offenen U-förmigen Körper 34 (Figur 4a), der auf das Auflageelement 22 aufgesteckt ist und im Ausführungsbeispiel drei Tragpunktspitzen 26 übergreift und zwei Tragpunktspitzen 26 überdeckt. Hierfür sind Schutzabschnitte 37 vorgesehen, die gleichzeitig als Anschlag- oder Auflagefläche des Tragelementes 31 an den Tragpunktspitzen 26 dient. Benachbart zum Schutzabschnitt 37 ist eine Auflagefläche 38 für das Gutteil 32 vorgesehen, welches erhöht gegenüber einer Auflagefläche 39 des Restteiles 33 angeordnet ist. Nach dem Schneiden des Werkstückes 19 sinkt das Restteil 33 gegenüber dem Gutteil 32 ab, so dass eine optische Überwachung ermöglicht ist, da die Gutteile 32 auf einem hohen Niveau und die Rostteile 33 auf einem niederen Niveau sich befinden und gleichzeitig dadurch separiert werden.

Die Tragelemente 31 sind durch einfaches Aufstecken auf dem Auflageelement 22 positioniert. Das Tragelement 31 greift mit seinen Schenkeln 41 an Seitenflächen 42 des Auflageelementes 22 an und wird dadurch fixiert. Dies ermöglicht eine vibrationsarme oder vibrationsfreie Anordnung. Die Tragelemente 31 können aufgrund dieser Ausgestaltung auch in Längsrichtung entlang der Auflageelemente 22 verschiebbar vorgesehen sein. Zur eindeutigen Lagefixierung kann vorgesehen sein, dass die Tragelemente 31, insbesondere die Schutzabschnitte 37, eine Kontur aufweisen, welche an den Tragpunktspitzen 26 angreifen und in vorgegebenen Abständen in benachbarte Positionen verschiebbar sind.

Die in Figur 3 dargestellten Schnittlinien I und II zeigen die Darstellungen gemäß Figur 4b und Figur 4c und in Figur 4a ist eine Seitenansicht der Figur 3 dargestellt. Aus diesen Darstellungen wird die Ausgestaltung des Tragelementes 31 als Stanz-Biegeteile oder Schneid-Biegeteile offensichtlich, welches bevorzugt aus einem Stück hergestellt ist. Die beiden parallel zueinander verlaufenden Schenkel 41 des Tragelementes 31 sind durch ein Verbindungssteg oder Bügel 43 miteinander verbunden. Durch den Grad der Biegung kann der freie Weg zwischen den Schenkeln 41 kleiner als die Breite des Auflageelementes 22 vorgesehen sein, so dass nach dem Aufsetzen des Tragelementes 31 auf das Auflageelement 22 die Schenkel 41 unter einer zumindest geringen Kraftbeanspruchung klemmend anliegen. Der Schutzabschnitt 37 ist durch eine Abkantung gegenüber dem Schenkel 41 um 90° oder bevorzugt weniger als 90° an dem einen Schenkel 41 vorgesehen. Die Auflageflächen 38 und 39 sind in der Verlängerung eines Schenkels 41 ausgebildet. Diese beispielhafte Anordnung eines Tragelementes 31 gemäß den Figuren 2, 3, und 4a bis c ermöglicht eine kostengünstige Ausgestaltung.

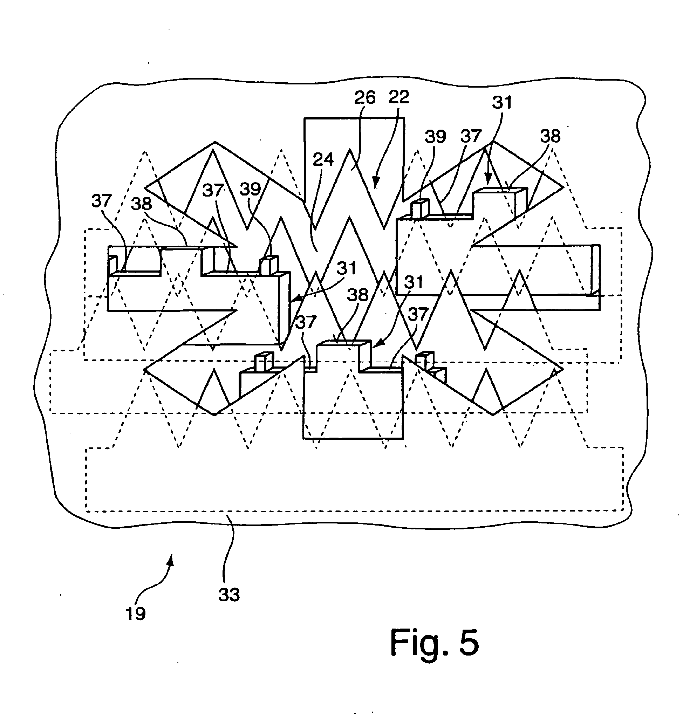

In Figur 5 ist eine perspektivische Darstellung eines Werkstückes 19 nach dem Schneidprozess dargestellt, wobei das Gutteil zur Wahrung der Übersichtlichkeit nicht dargestellt ist, welches ansonsten auf den Auflageflächen 38 der Tragelemente 31 erhöht gegenüber dem Restteil 33 aufliegt. Die Tragelemente 31 werden gemäß der Erfindung, in Abhängigkeit der vorgesehenen Schachtelung für den Schneidprozess derart positioniert, dass beispielsweise eine Dreipunktauflage für das Gutteil gegeben ist, wie dies aus Figur 5 hervorgeht. Dadurch ist eine sichere Auflage des Gutteiles gegeben. Gleichzeitig kann das Tragelement 31 derart zur Schneidkontur positioniert sein, dass der Schutzabschnitt 37 im Überfahrbereich des Schneidstrahles liegt. Somit kann einerseits die zumindest eine darunter liegende Tragpunktspitze 26 geschützt werden und andererseits sowohl das Gutteil als auch das Restteil 33 im Randbereich beziehungsweise nahe der Schneidkontur aufgenommen werden, wodurch eine verkippungsfreie Lagerung beider Teile unterstützt wird. Die Platzierung der einzelnen Tragelemente 31 bei der vorliegenden Geometrie des Gutteiles sind nur beispielhaft.

Nach dem vollständigen Durchlaufen eines Bearbeitungsprogrammes können die Tragelemente 31 von den Auflageelementen 22 abgehoben oder entfernt werden, Die Be- und Entstückung solcher Tragelemente 31 wird , gemäß der Erfindung, über Handhabungseinrichtungen 35, wie zum Beispiel durch ein- oder mehrachsige Linearachsensysteme oder Roboter, vorgesehen, die beispielweise für das Be- und Entladen der Werkstückauflage 14 eingesetzt werden oder durch ein Linearachsensystem in der Bearbeitungsmaschine 16. Analog kann auch eine manuelle Bestückung erfolgen. Die Positionierung der Tragelemente 31 kann durch ein externes Anzeigegerät 36, zum Beispiel einen Beamer, unterstützt werden. Dieses Anzeigegerät 36 ist beispielsweise am Gehäuse 17 der Bearbeitungsanlage 11 vorgesehen und projiziert die einzelnen Bestückungspositionen der Tragelemente 31 auf das beziehungsweise die Auflageelemente 22 der Werkstückauflage 14.

Eine alternative und nicht näher Form der Tragelemente 31 gemäß den Figuren 1- bis 4c sieht vor, dass lediglich Auflageflächen 38, 39 für Gutteile 32 oder für Restteile 33 vorgesehen sind. Des Weiteren kann alternativ vorgesehen sein, dass eine Auflagefläche 38 für das Gutteil 32 und zumindest eine Auflagefläche 39 für das Restteil 33 an einem Tragelement in gleicher Höhe vorgesehen sind. Ebenso können Ausführungsformen vorgesehen sein, bei denen das Gutteil 32 nach dem Heraustrennen vom Werkstück 19 gegenüber dem Restteil 33 vertieft ausgebildet ist. Hierzu gelten die vorstehenden Ausführungen in Analogie.

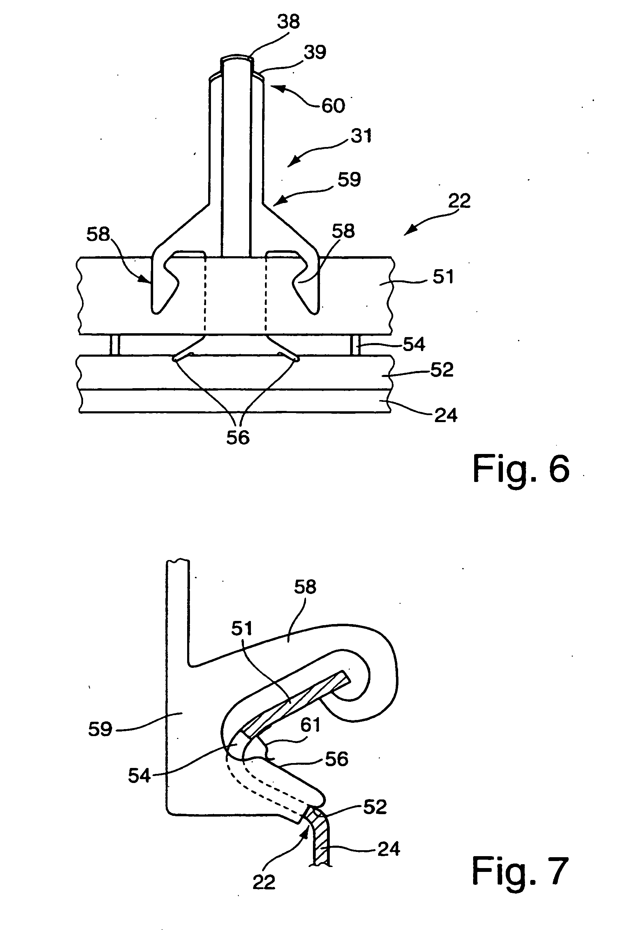

In den Figuren 6 und 7 ist eine alternative Form eines Tragelementes 31 sowie eines Auflageelementes 22 dargestellt. Das Auflageelement 22 umfasst eine Schutzleiste 51, welche oberhalb einer Halteleiste 52 vorgesehen ist, die beispielsweise V-förmig zur Schutzleiste 51 angeordnet ist. Die Halteleiste 52 geht in eine bevorzugt senkrecht stehende Auflageleiste 24 über, welche am Rahmen 21 der Werkstückauflage 14 befestigt ist. Zwischen der Halteleiste 52 und der Schutzleiste 51 sind Aussparungen 54 vorgesehen. In diese Aussparungen 54 greifen Beinchen 56 des Tragelementes 31 an und ein. Darüber hinaus wird das Tragelement 31 über Ärmchen 58 fixiert, welche an einer Unterseite der Schutzleiste 51 angreifen oder anliegen. Durch diese Ausgestaltung des Auflageelementes und Anordnung des Tragelementes 31 wird sichergestellt, dass die Auflageflächen oder Anlageflächen für die Beinchen 56 und Ärmchen 58 vor Verschmutzungen geschützt sind, da diese unterhalb der Schutzleiste 51 liegen. Dies ermöglicht eine präzise Anordnung und Ausrichtung der Tragelemente 31 selbst nach mehrmaligem Gebrauch dieser Auflageelemente 22. Die Neigung der Schutzleiste 51 weist des Weiteren den Vorteil auf, dass Stahlreflexionen und Materialspritzer von dem Schneidspalt abgelenkt werden, so dass eine Unterseite des Gutteiles eine hohe Qualität aufweist.

Die Beinchen 56 und Ärmchen 58 sind über einen Stützabschnitt 59 miteinander verbunden, wobei an einem Kopfteil 60 des Stützschnittes 59 eine Auflagefläche 38 für das Gutteil 32 vorgesehen ist. Bei dem in Figur 6 dargestellten Ausführungsbeispiel ist benachbart zur Auflagefläche 38 eine Auflagefläche 39 für das Restteil 33 vorgesehen. Eine alternative Form sieht vor, dass das Tragelement 31 als Gutteiltragelement nur mit einer oder mehreren Auflageflächen 38 und als Restteil-tragelement nur mit einer oder mehreren Auflagefläche 39 ausgebildet ist.

Das Tragelement 31 ist als Blechteil ausgebildet. Zunächst wird die Kontur gestanzt oder geschnitten und anschließend in einem Biegeprozess wird eine V-förmige Anordnung des Tragelementes 31 eingebracht. Dadurch wird eine Versteifung des Stützabschnittes 59 erzielt, der zumindest die Auflagefläche 38 aufweist.

In Figur 7 ist an einer Unterseite der Schutzleiste 51 ein Federelement 61 vorgesehen, welches das Tragelement 31 in seiner Halteposition an dem Auflageelement 22 fixiert, insbesondere die Beinchen 56 an der Halteleiste 52 zumindest teilweise hintergreifend fixiert.

Das Federelement 61 gemäß Figur 7 kann als durchgängiges Federelement entlang der Schutzleiste 51 ausgebildet sein. Alternativ können weitere Ausgestaltungen zur Erzielung einer Klemmung erzielt werden, wie beispielsweise durch eine Art Exzenterwelle oder ein Klemmblech oder einen Formschluss, der nach dem vollständigen Positionieren des Tragelementes 31 eine Klemmung bewirkt.

Die Auflagefläche 38 des Tragelementes 31 ist außerhalb beziehungsweise außermittig zu den Angriffspunkten der Ärmchen 58 und Beinchen 56 vorgesehen. Dadurch wird beim Aufliegen eines Gut- und Restteiles 32, 33 die Position des Tragelementes 31 stabilisiert und ein Verkippen verhindert.

Die Tragelemente 31 gemäß den vorstehenden Formen werden in verschiedenen Materialien ausgebildet, so dass eine Anpassung an das Material des zu bearbeitenden Werkstückes ermöglicht ist.

## Patentansprüche

1. Bearbeitungsanlage, insbesondere Laserbearbeitungsanlage, mit einer Werkstückauflage (14) zur Aufnahme eines insbesondere tafelförmigen Werkstücks (19), welche das Werkstück (19) mit einem Schneidstrahl, insbesondere Laserstrahl, bearbeitet, wobei die Werkstückauflage (14) in einem Rahmen (21) mehrere nebeneinander angeordnete Auflageelemente (22) aufnimmt, auf denen ein oder mehrere Tragelemente (31) anbringbar sind, auf welchen das Werkstück (19) aufliegt, gekennzeichnit durch eine Handhabungseinrichtung (35), und wobei die Tragelemente (31) mit der Handhabungseinrichtung (35) auf die Auflageelemente (22) be - und entstückbar sind, wobei die Positionierung der Tragelemente (31) unter Berücksichtigung einer Schachtelung von Gutteilen (32) des nachfolgenden Bearbeitungsprozesses vorgesehen ist.

2. Bearbeitungsanlage nach Anspruch 1, **dadurch gekennzeichnet, dass** das zumindest eine Auflageelement (22) einen oder mehrere geradlinige Auflageabschnitte oder eine wellenförmige oder sägezahnförmige Struktur aufweist, an der das Tragelement (31) gegen Verschieben gesichert an dem Auflageelement (22) anbringbar ist.

3. Bearbeitungsanlage nach einem der vorhergehenden Ansprüche, **dadurch gekennzeichnet, dass** das Tragelement (31) zumindest eine Auflagespitze oder Auflagefläche (38) für ein Gutteil (32) umfasst und als Gutteiltrageelement ausgebildet ist und zumindest ein weiteres Tragelement (31) zumindest eine Auflagespitze oder Auflagefläche (39) für ein Restteil (33) aufweist und als Restteiltragelement ausgebildet ist, wobei die Auflagefläche (38) des Gutteils (32) auf einem anderen, insbesondere höheren Niveau als die des Restteils (33) vorgesehen ist.

4. Bearbeitungsanlage nach Anspruch 1, **dadurch gekennzeichnet, dass** das Tragelement (31) eine Auflagespitze oder Auflagefläche (38) für ein Gutteil (32) und zumindest benachbart eine Auflagespitze oder Auflagefläche (39) für ein Restteil (33) aufweist, wobei die Auflagefläche (38) des Gutteils (32) auf einem anderen, insbesondere höheren Niveau als die des Restteils (33) vorgesehen ist.

5. Bearbeitungsanlage nach Anspruch 3 oder 4, **dadurch gekennzeichnet, dass** eine Höhendifferenz zwischen der Auflagefläche (38) des Gutteils (32) und der Auflagefläche (39) des Restteils (33) größer als eine Dicke des plattenförmigen Werkstücks (19) ausgebildet ist.

6. Bearbeitungsanlage nach einem der Ansprüche 3 bis 5, **dadurch gekennzeichnet, dass** die Auflagefläche (38) für das Gutteil (32) oder die Auflagefläche (39) des Restteils (33) elektrisch isolierend ausgebildet ist.

7. Bearbeitungsanlage nach einem der vorhergehenden Ansprüche, **dadurch gekennzeichnet, dass** das Tragelement (31) einstückig als Blechteil ausgebildet ist.

8. Bearbeitungsanlage nach einem der vorhergehenden Ansprüche, **dadurch gekennzeichnet, dass** das Tragelement (31) einen nach unten offenen U-förmigen Querschnitt aufweist und zumindest eine am Auflageelement (22) vorgesehene Tragpunktspitze (26) überdeckt und vorzugsweise auf der zumindest einen Tragpunktspitze (26) aufliegt und dass vorzugsweise Schenkel (41) des im U-förmigen Querschnitt ausgebildeten Tragelementes (31) über zumindest einen geringen Druck an Seitenflächen (42) des Auflageelementes (22) anliegen.

9. Bearbeitungsanlage nach Anspruch 8, **dadurch gekennzeichnet, dass** das Tragelement (31) benachbart zur Auflagefläche (38) des Gutteils (32) oder zwischen einer Auflagefläche (38) des Gutteils (32) und einer Auflagefläche (39) des Restteils (33) einen Schutzabschnitt (37) aufweist, der zumindest eine Tragpunktspitze (26) überdeckt und vorzugsweise zumindest geringfügig geneigt zur Auflageebene des Werkstücks (19) angeordnet ist.

10. Bearbeitungsanlage nach einem der Ansprüche 1 bis 7, **dadurch gekennzeichnet, dass** das Auflageelement (22) einen gegenüber der Auflageebene des Werkstücks (19) geneigte Schutzleiste (51) umfasst, welche eine Halteleiste (52) zumindest teilweise überdeckt, an dem ein erster Befestigungsabschnitt des Tragelementes (31) angreift und dass vorzugsweise die Halteleiste (52) V-förmig zur Schutzleiste (51) vorgesehen ist und in eine senkrecht stehende Auflageleiste (24) übergeht.

11. Bearbeitungsanlage nach Anspruch 10, **dadurch gekennzeichnet, dass** das Tragelement (31) einen ersten Befestigungsabschnitt, insbesondere Beinchen (56) umfasst, welche zumindest an der Halteleiste (52) abstützend angreifen und einen zweiten Befestigungsabschnitt, insbesondere Ärmchen (58) aufweist, welche auf einer dem Werkstück (19) abgewandten Seite der Schutzleiste (51) angreifen sowie insbesondere einen Stützabschnitt (59) umfasst, der die Beinchen (56) und Ärmchen (58) miteinander verbindet und dessen Kopfteil (60) zumindest eine Auflagefläche (38, 39) für das Gutteil (32) oder Restteil (33) umfasst und dass vorzugsweise das Tragelement (31) in der Draufsicht gesehen eine V-förmige Gestalt aufweist.

12. Bearbeitungsanlage nach Anspruch 10 oder 11, **dadurch gekennzeichnet, dass** zwischen der Schutzleiste (51) und der Halteleiste (52) Aussparungen (54) vorgesehen sind, in die die Beinchen (56) des Tragelementes (31) eingreifen.

13. Bearbeitungsanlage nach einem der Ansprüche 10 bis 12, **dadurch gekennzeichnet, dass** auf der dem Werkstück (19) abgewandten Seite der Schutzleiste (51) ein Federelement (61) vorgesehen ist, welches das Tragelement (31) in einer Halteposition nach dem Positionieren zum Auflageelement (22) sichert und dass vorzugsweise das Federelemente (61) an den Beinchen (56) des Tragelementes (31) angreift und eine die Halteleiste (52) mit dem Beinchen (56) zumindest teilweise hintergreifende Position sichert.

14. Bearbeitungsanlage nach einem der Ansprüche 10 bis 13, **dadurch gekennzeichnet, dass** die zum Werkstück (19) weisenden Stirnflächen des Tragelementes (31) gegenüber einer Auflageebene des Werkstückes (19) geneigt sind.

## Claims

1. A machining system, in particular a laser machining system, having a workpiece rest (14) for holding an in particular tabular workpiece (19) which machines the workpiece (19) using a cutting beam, in particular laser beam, said workpiece rest (14) holding a plurality of rest elements (22), which are arranged adjacent to one another, in a frame (21), and supporting one or more supporting elements (31), which are attachable to the at least one rest element (22) on which the workpiece (19) rests **characterized by** a handling device (35), and wherein the supporting elements (31) are placeable onto and removed from the rest elements (22) by means of the handling device (35) and the positioning of the supporting elements (31) being selected taking in consideration the resting of product parts (32) for the subsequent machining process.

2. The machining system as claimed in claim 1, **characterized in that** the at least one rest element (22) has one or more rectilinear rest sections or a corrugated or sawtooth-shaped structure to which the supporting element (31) is attached, so as to be prevented from moving, to the rest element (22).

3. The machining system according to one of the preceeding claims, **characterized in that** the supporting element (31) comprises at least one rest peak or rest surface (38) for a product part (32) and is designed as a product-part supporting element, and at least one further supporting element (31) has at least one rest peak or rest surface (39) for a residual part (33) and is designed as a residual-part supporting element, with the contact surface (38) of the product part (32) being provided at a different, in particular higher level than that of the residual part (33).

4. The machining system as claimed in claim 1, **characterized in that** the supporting element (31) has a rest peak or rest surface (38) for a product part (32) and, at least adjacent, a rest peak or rest surface (39) for a residual part (33), with the rest surface (38) of the product part (32) being provided at a different, in particular higher level than that of the residual part (33).

5. The machining system as claimed in claim 3 or 4, **characterized in that** a height difference between the rest surface (38) of the product part (32) and the rest surface (39) of the residual part (33) is greater than a thickness of the plate-shaped workpiece (19).

6. The machining system as claimed in one of claims 3 or 5, **characterized in that** the rest surface (38) for the product part (32) or the rest surface (39) of the residual part (33) is of electrically insulating design.

7. The machining system according to one of the preceeding claims, **characterized in that** the supporting element (31) is formed in one piece as a sheet-metal part.

8. The machining system according to one of the preceeding claims, **characterized in that** the supporting element (31) has a U-shaped cross section, which is open in the downward direction, and covers at least one supporting point peak (26), which is provided on the rest element (22), and preferably rests on the at least one supporting point peak (26) and that preferably limbs (41) of the supporting element (31) which is of U-shaped design in cross section bear with at least a slight pressure against side surfaces (42) of the rest element (22).

9. The machining system as claimed in claim 8, **characterized in that** the supporting element (31) has, adjacent to the rest surface (38) of the product part (32) or between a rest surface (38) of the product part (32) and a rest surface (39) of the residual part (33), a protective section (37) which covers at least one supporting point peak (26) and which is preferably arranged so as to be at least slightly inclined with respect to the rest plane of the workpiece (19).

10. The machining system as claimed in one of the claims 1 to 7, **characterized in that** the rest element (22) comprises a protective strip (51) which is inclined with respect to the rest plane of the workpiece (19), which protective strip (51) at least partially covers a retaining strip (52) on which a first fastening section of the supporting element (31) engages and that preferably the retaining strip (52) is provided in a V-shape with respect to the protective strip (51) and merges into a vertically aligned rest strip (24).

11. The machining system as claimed in claim 10, **characterized in that** the supporting element (31) comprises as first fastening section legs (56), which engage in a supporting manner at least on the retaining strip (52), and as second fastening section, in particular arms (58), which engage on a side, which faces away from the workpiece (19), of the protective strip (51), and also in particular a support section (59) which connects the legs (56) and arms (58) to one another and whose head part (60) comprises at least one rest surface (38, 39) for the product part (32) or residual part (33) and preferably that the supporting element (31) has a V-shaped design as viewed in plan view.

12. The machining system as claimed in claim 10 or 11, **characterized in that** cutouts (54) are provided between the protective strip (51) and the retaining strip (52), into which cutouts (54) the legs (56) of the supporting element (31) engage.

13. The machining system as claimed in one of the claims 10 to 12, **characterized in that** a spring element (61) is provided on that side of the protective strip (51) which faces away from the workpiece (19), which spring element (61) secures the supporting element (31) in a retaining position after the positioning with respect to the rest element (22) and that preferably the spring element (61) engages on the legs (56) of the supporting element (31) and secures a position in which the legs (56) engage at least partially behind the retaining strip (52).

14. The machining system as claimed in one of the claims 10 to 13, **characterized in that** the end surfaces, which point toward the workpiece (19), of the supporting element (31) are inclined with respect to a rest plane of the workpiece (19).

## Revendications

1. Unité d'usinage, notamment unité d'usinage au laser, avec un porte-pièce (14) destiné à recevoir une pièce à usiner (19) notamment en forme de plaque, laquelle usine la pièce à usiner (19) au moyen d'un jet de coupe, notamment d'un rayon laser, le porte-pièce (14) recevant dans un cadre (21) plusieurs éléments d'appui (22) disposés côte à côte, sur lesquels peuvent être montés un ou plusieurs éléments supports (31) sur lesquels repose la pièce à usiner (19), **caractérisée par** un dispositif de maniement (35), et les éléments supports (31) pouvant être montés sur les éléments d'appui (22) et retirés de ceux-ci à l'aide du dispositif de maniement (35), le positionnement des éléments supports (31) étant prévu en tenant compte d'un emboîtement de parties utiles (32) du processus d'usinage suivant.

2. Unité d'usinage selon la revendication 1, **caractérisée en ce que** ledit au moins un élément d'appui (22) présente une ou plusieurs parties d'appui rectilignes ou une structure de forme ondulée ou en dents de scie sur laquelle l'élément support (31) peut être monté sur l'élément d'appui (22) de manière à ce qu'il ne puisse pas se déplacer.

3. Unité d'usinage selon l'une quelconque des revendications précédentes, **caractérisée en ce que** l'élément support (31) comprend au moins une pointe d'appui ou surface d'appui (38) pour une partie utile (32) et est réalisé en tant qu'élément support de partie utile, et **en ce qu'**au moins un autre élément support (31) présente au moins une pointe d'appui ou surface d'appui (39) pour une partie résiduelle (33) et est réalisé en tant qu'élément support de partie résiduelle, la surface d'appui (38) de la partie utile (32) étant prévue à un autre niveau, notamment à un niveau plus élevé, que celui de la partie résiduelle (33).

4. Unité d'usinage selon la revendication 1, **caractérisée en ce que** l'élément support (31) présente une pointe d'appui ou surface d'appui (38) pour une partie utile (32) et au moins de manière contiguë une pointe d'appui ou surface d'appui (39) pour une partie résiduelle (33), la surface d'appui (38) de la partie utile (32) étant prévue à un autre niveau, notamment un niveau plus élevé, que celui de la partie résiduelle (33).

5. Unité d'usinage selon la revendication 3 ou 4, **caractérisée en ce que** la différence de hauteur entre la surface d'appui (38) de la partie utile (32) et la surface d'appui (39) de la partie résiduelle (33) est réalisée de manière à être supérieure à une épaisseur de la pièce à usiner (19) en forme de plaque.

6. Unité d'usinage selon l'une quelconque des revendications 3 à 5, **caractérisée en ce que** la surface d'appui (38) pour la partie utile (32) ou la surface d'appui (39) de la partie résiduelle (33) est formée de manière à être électriquement isolante.

7. Unité d'usinage selon l'une quelconque des revendications précédentes, **caractérisée en ce que** l'élément support (31) est réalisé d'une seule pièce en tant qu'élément en tôle.

8. Unité d'usinage selon l'une quelconque des revendications précédentes, **caractérisée en ce que** l'élément support (31) présente une section en forme de U ouvert vers le bas et recouvre au moins une pointe de support (26) prévue sur l'élément d'appui (22) et repose de préférence sur ladite au moins une pointe de support (26), et **en ce que** de préférence des branches (41) de l'élément support (31) présentant une section en forme de U reposent, grâce à au moins une faible pression, contre des faces latérales (42) de l'élément d'appui (22).

9. Unité d'usinage selon la revendication 8, **caractérisée en ce que** l'élément support (31) présente, de manière contiguë à la surface d'appui (38) de la partie utile (32) ou entre une surface d'appui (38) de la partie utile (32) et une surface d'appui (39) de la partie résiduelle (33), une partie de protection (37) qui recouvre au moins une pointe de support (26) et qui est disposée de préférence au moins de manière légèrement inclinée par rapport au plan d'appui de la pièce à usiner (19).

10. Unité d'usinage selon l'une quelconque des revendications 1 à 7, **caractérisée en ce que** l'élément d'appui (22) comprend une baguette de protection (51) qui est inclinée par rapport au plan d'appui de la pièce à usiner (19) et recouvre au moins partiellement une baguette de retenue (52) contre laquelle appuie une première partie de fixation de l'élément support (31), et **en ce que** de préférence la baguette de retenue (52) est prévue en forme de V par rapport à la baguette de protection (51) et prend graduellement la forme d'une baguette d'appui (24) verticale.

11. Unité d'usinage selon la revendication 10, **caractérisée en ce que** l'élément support (31) comprend une première partie de fixation, notamment des pattes (56) qui engrènent en prenant appui au moins sur la baguette de retenue (52) et présente une deuxième partie de fixation, notamment des bras (58) qui appuient sur un côté de la baguette de protection (51) opposé à la pièce à usiner (19) et comprend notamment une partie de renforcement (59) qui relie entre eux les pattes (56) et les bras (58) et dont la partie supérieure (60) comprend au moins une surface d'appui (38, 39) pour la partie utile (32) ou pour la partie résiduelle (33), et **en ce que** de préférence l'élément support (31) présente, dans une vue de dessus, une forme en V.

12. Unité d'usinage selon la revendication 10 ou 11, **caractérisée en ce qu'**entre la baguette de protection (51) et la baguette de retenue (52) sont prévus des évidements (54) dans lesquels engrènent les pattes (56) de l'élément support (31).

13. Unité d'usinage selon l'une quelconque des revendications 10 à 12, **caractérisée en ce que** sur le côté de la baguette de protection (51) opposé à la pièce à usiner (19) est prévu un élément ressort (61) qui maintient l'élément support (31) dans une position de retenue après son positionnement par rapport à l'élément d'appui (22), et **en ce que** de préférence l'élément ressort (61) appuie contre les pattes (56) de l'élément support (31) et garantit ainsi une position d'engagement au moins partiel par l'arrière de la baguette de retenue (52) avec la patte (56).

14. Unité d'usinage selon l'une quelconque des revendications 10 à 13, **caractérisée en ce que** les faces frontales de l'élément support (31) tournées vers la pièce à usiner (19) sont inclinées par rapport à un plan d'appui de la pièce à usiner (19).
